# EUROPEAN PATENT SPECIFICATION

(11) **EP 2 471 216 B1**
(45) Date of publication and mention of the grant of the patent: **08.01.2014**
(21) Application number: 10757626.6
(22) Date of filing: 24.08.2010
(51) Int. Cl.: H04L 12/12, H04L 12/28

(54) **NETWORK APPARATUS AND METHOD**
NETZAPPARAT UND VERFAHREN
APPAREIL RÉSEAU ET PROCÉDÉ

(30) Priority: 25.08.2009 GB 0914774; 25.08.2009 GB 0914773; 25.08.2009 GB 0914775
(43) Date of publication of application: 04.07.2012
(73) Proprietor: Gigle Networks Limited, Edinburgh EH3 9SU (GB)
(72) Inventor: RUIZ LOPEZ, David, E-08019 Barcelona (ES); ABAD MOLINA, Jose, E-29730 Rincon de la Victoria (ES); HURWITZ, Jonathan, Ephraim, David, Edinburgh EH6 7PM (GB); OGARA FERNANDEZ DE ARROYABE, Jose Maria, E-08002 Barcelona (ES)
(74) Representative: Jehle, Volker Armin
(86) International application number: PCT/GB2010/051397
(87) International publication number: WO 2011/023993

(56) References cited:
- WO-A2-2008/030245
- US-A1- 2004 264 397
- US-A1- 2006 271 678
- US-A1- 2008 232 290
- US-A1- 2008 239 978
- US-A1- 2009 147 696

## Description

### Field of the invention

The present invention relates to network apparatus configured to form a network of operative devices in a building and a method of operating such network apparatus.

### Background to the invention

There is an increasing need to save power in electronic equipment, particularly in digital home networks. Power consumption targets are at times driven by regulations and/or industry bodies, which have formed initiatives such as Energy Star and the European Union Code of Conduct. Power saving is also driven by the market pull of environmentally 'green' products. In general, saving power not only reduces running costs but also prolongs component lifetime.

In home electronic networks, such as multi-media entertainment networks, the challenge is to save power in networks that see varying levels of use while maintaining a desired level of reliability and performance. One of the most promising periods for power saving is when a device is not being used. Typically, such a device will remain in an unused state for a significant period of time. At present, many devices are put into and brought out of a standby condition by human action, e.g. by pressing a standby button. Alternatively, a device is put into a standby condition by application of a timeout process that turns off the device after the elapse of a predetermined period of time from last use and is brought back into use by resumption of use of the device. In home networks, power management commands for a specific device can normally be entered by a user on a host interface rather at the device itself. In certain home networks, a network node may notify the network controller that the network node is entering a standby state and when the network node will leave the standby state. The network controller stores network data while the network node is in standby and transmits the network data to the network node when the network node leaves the standby state.

A power saving network which is based on communication activity is disclosed in US 2008/0239978.

The present inventors have become appreciative of shortcomings of such conventional approaches to power saving management when applied to networked operative devices.

Therefore it is an object for the present invention to provide improved network apparatus configured to form a network of operative devices in a building having an already installed communications medium, which, in use of the network apparatus, provides for communication of data between operative devices.

### Statement of invention

According to a first aspect of the present invention there is provided Network apparatus and a method of operating network apparatus according to claims 1 and 14.

Other optional features and aspects of the invention are as described in the appended dependent claims.

### Brief description of drawings

Further features and advantages of the present invention will become apparent from the following specific description, which is given by way of example only and with reference to the accompanying drawings, in which:
Figure 1 is a block diagram representation of a network of operative devices in a building according to the present invention;
Figure 2 is a block diagram representation of network node apparatus present in Figure 1;
Figure 3 shows a periodic synchronisation signal;
Figure 4A to 4C shows different power saving profiles;
Figure 5 is a finite state machine representation of transitions between operating conditions; and
Figure 6 is a flow chart representation of steps involved in adaptive power management.

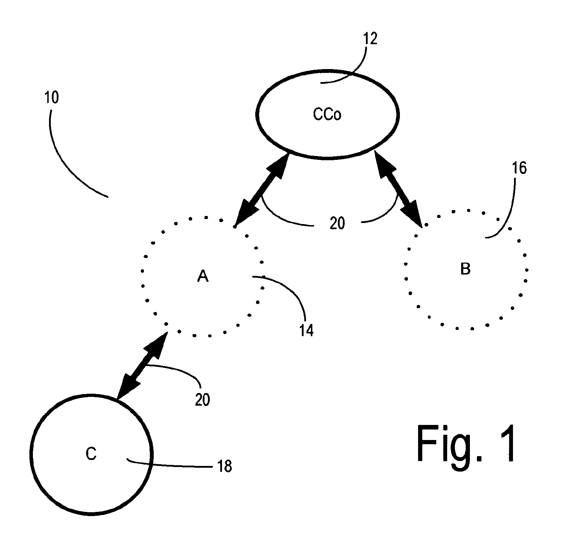

Figure 1 is a block diagram representation of a network 10 of operative devices in a residential building. The network comprises first 12, second 14, third 16 and fourth 18 nodes. Adjacent pairs of nodes are connected to each other by an already installed communications medium 20, such as mains power wiring, which provides for communication between and amongst a plurality of rooms in the residential building. Thus, for example, each of the first to fourth nodes may be located in a different room of the residential building. Each node comprises a different multi-media device (which constitutes an operative device). The devices may be heterogeneous as regards their configuration for different applications, e.g. one operative device may be a media player and another operative device may be a storage device. Alternatively or in addition, the operative devices may be for substantially a same application, e.g. media playing, but be heterogeneous as regards their different hardware or firmware configurations, e.g. a general purpose device, such as a PC, configured to play video and a dedicated video player. The network apparatus may comprise at least one operative device.

In the example given, the first node 12 comprises a Home Gateway (HGW), the second node 14 comprises Personal Computer (PC), the third node 16 comprises audio-visual entertainment apparatus and the fourth node 18 comprises Network Attached Storage (NAS). In the network 10 of Figure 1 the first node 12 is configured to operate as a communications controller, the second 14 and third 16 nodes are configured to operate as repeater nodes and the fourth node 18 is configured to operate as a standard network node. A communications controller controls the function of the network to which it belongs. Normally there is only one communications controller in a network. A standard node provides for communication of data from the branch of the communications medium leading to the node to the branch of communications medium leading from the node and for communication with the multi-media device connected to the node. A repeater node provides for communication of data from the branch of the communications medium leading to the node to the branch of communications medium leading from the node but provides for no communication with the multi-media device connected to the node, e.g. where the multi-media device is not being used. Referring to Figure 1, the configuration of the nodes might be such that the HGW connected to the first node is streaming a film from an external source to the network and the NAS connected to the fourth node 18 might be saving the film.

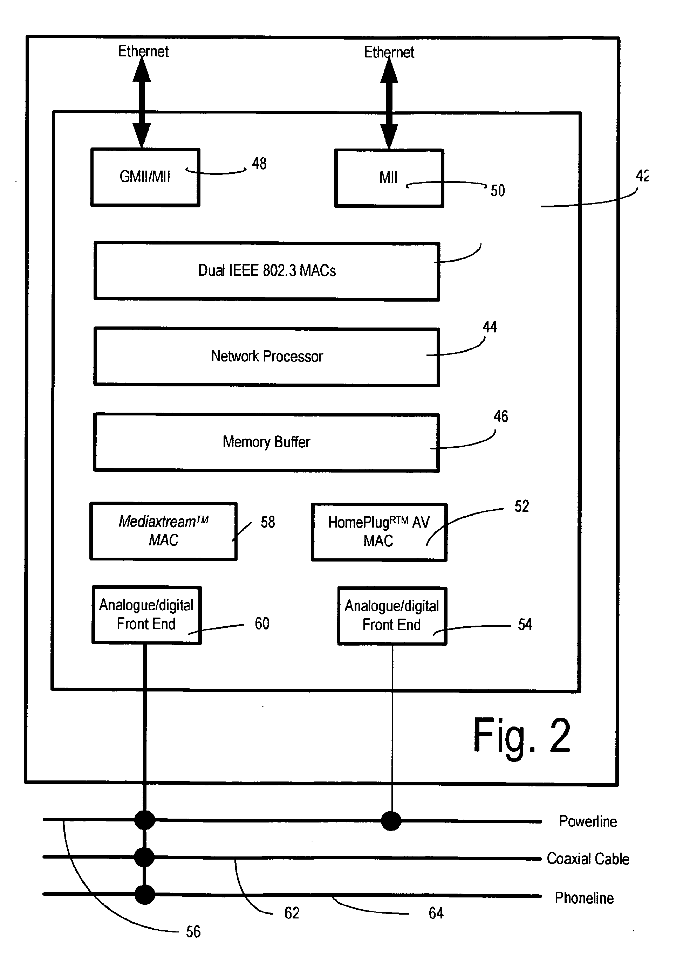

Figure 2 is a block diagram representation of network node apparatus 40 to be found at each of the first to fourth nodes 12, 14, 16, 18 of Figure 1. The network node apparatus 40 comprises a home networking integrated circuit 42 (a GGL541 from Gigle Semiconductors Ltd of Capital House, 2 Festival Square, Edinburgh, EH3 9SU, UK) provided within an appropriate enclosure. The home networking integrated circuit 42 comprises a processor 44 and processor memory 46. The processor 44 is operative to control a Dual IEEE 802.3 Medium Access Controller (MAC), which in turn operates with each of a GMII/MII interface 48 and a MII interface 50. The enclosure containing the home networking integrated circuit 42 also contains a first Ethernet socket (not shown), which is in electrical communication with the GMII/MII interface 48, and a second Ethernet socket (not shown), which is in electrical communication with the MII interface 50. Each of the first and second Ethernet sockets constitutes an operative device connection. The home networking integrated circuit 42 further comprises a HomePlug ® AV Medium Access Controller (MAC) 52, which is operative under the control of the processor 44 to provide for communication of data via first analogue interface circuitry 54 over mains power wiring 56. The first analogue interface circuitry 54 comprises a transceiver (e.g a serial data transceiver), signal conditioning and support circuitry. The first analogue interface circuitry 54 constitutes a communications medium connector. In addition, the home networking integrated circuit 42 comprises a mediaxtream™ Medium Access Controller (MAC) 58, which is operative under the control of the processor 44 to provide for communication of data via second analogue interface circuitry 60 over mains power wiring 56, co-axial cable 62 and phone line 64. The second analogue interface circuitry 60 comprises a transceiver for each of the three communications media, signal conditioning and support circuitry. The second analogue interface circuitry 60 constitutes a communications medium connector. Network node apparatus that is capable of using two or more different communications media is described in detail in WO 2008/142450. In alternative forms, the communications media comprises wireless and optical in addition to or instead of the communications media shown in Figure 2 and described above.

The network node apparatus is made and sold separately to the multi-media device to which it is to be connected. In this form, the network node apparatus connects to the multi-media device through a direct point to point host connection such as Ethernet and using one of the Ethernet sockets described above. In another form, the network node apparatus is embedded within the multi-media device such that the network node apparatus is made and sold with the multi-media device. In this other form, communication between the network node apparatus and the multi-media device is by means of a chip to chip host connection, such as xMII (i.e. MIII, RMII, GMII, RGMII, etc) or one of the family of PCI interfaces (i.e. PCI, miniPCI, PCIe, etc).

The network node apparatus 40 at each of the first to fourth nodes in the network 10 of Figure 1 is configured to provide for operation with a multi-media device and for communication of data to and from other network node apparatus. As mentioned above, each network node apparatus 40 can be configured to function as a communications controller, a repeater node or a standard network node. Such configuration is provided by firmware resident in each network node apparatus 40. The HomePlug® AV White Paper (HomePlug® Powerline Alliance, Inc., 5200 SW Macadam Avenue, Suite 470, Portland, Oregon 97239 USA) provides details of the system architecture of network node apparatus. The HomePlug® 1.0 Technology White Paper provides details of HomePlug® standards as regards the physical and higher layers and the communications data packet frame formats (HomePlug® Powerline Alliance, Inc.). Each network node apparatus 40 stores data relating to other network node apparatus in the network 10. More specifically, the stored data comprises: identification of the other network node apparatus in the network; the Media Access Control (MAC) addresses of the other network node apparatus in the network; the roles (e.g. communications controller, standard network node or a repeater node) of the other network node apparatus in the network; routing tables for the other network node apparatus in the network; and bridging tables for the other network node apparatus in the network. Having network node apparatus that has data relating to other network node apparatus in a network provides for a decrease in a transition from the second to the first operating condition to thereby reduce the likelihood of degradation in a quality of service provided by operative devices connected to the network.

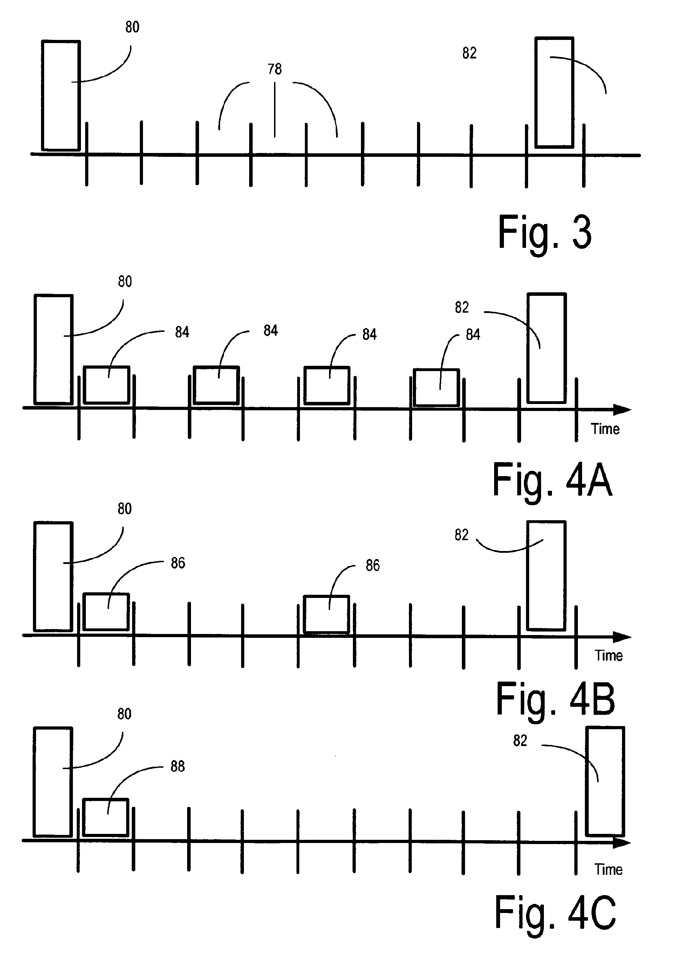

The configuration and operation of a network 10 comprising network node apparatus 40 as regards power saving will now be described with reference to Figure 3. Each network node apparatus 40 comprises power saving apparatus (not shown), which is operative to bring one or more of the following power saving measures into effect:
a) Turn off the power supply (i.e. gating the power supply) to one of more of parts of the analogue and digital circuitry on a selective basis, e.g. the microprocessor, the logic subsystem, the memory subsystem, the analogue/digital front end and components external to the home networking integrated circuit 42, such as the Ethernet transceiver and LEDs provided to indicate the status of the network node apparatus.
b) Reduce the power supply voltage to analogue or digital parts of the network node apparatus (i.e. voltage scaling), e.g. reduce the power supply voltage to the microprocessor from 1.6 volts to 1.2 volts.
c) Reduce the clock frequency (i.e. clock de-rating) of digital circuitry, e.g. single clocking the microprocessor and other such digital circuitry instead of double clocking, or clock-gate such circuitry.
d) Hold digital circuits in reset.
e) Put analogue circuitry in the home networking integrated circuit 42 and external to the home networking integrated circuit 42 into a tri-state condition.
f) Modify the biasing voltage of analogue components in the home networking integrated circuit 42 and external to the home networking integrated circuit 42.
g) Modify the accuracy or frequency of operation of analogue circuitry in the home networking integrated circuit 42 and external to the home networking integrated circuit 42.

The design of such power saving apparatus will be readily within the ordinary design capability of the skilled person. The power saving apparatus is under the control of the processor 44 of the home networking integrated circuit 42. Thus, the network node apparatus 40 has an active mode (which constitutes a first operating condition) in which the electrical circuits of the network node apparatus are all provided with electrical power and at least one standby mode (which constitutes a second operating condition) in which reduced or substantially no electrical power is provided to the transceivers. A first standby mode might be where electrical power is provided to the transceiver of the first analogue interface circuitry 54 and substantially no power is provided to the transceivers of the second analogue interface circuitry 60. A second standby mode might be where substantially no electrical power is provided to the transceivers of the first and second analogue interface circuitry 54, 60.

Power may be reduced in respect of different combinations of operative parts depending on which power saving approach is being followed; different power saving approaches may, for example, provide for different extents of power saving or different levels of latency. For example, a communication node may be operable to reduce or increase its, and/or another node's power consumption by switching off or on parts of the hardware according to the required throughput level. Therefore, if the node is required to transmit or receive data in a link at 1000 Mbps throughput, then it will consume more power (because it will have more parts "on" and/or the same parts will be "on" for longer) than if the node is require to transmit or receive only at 200 Mbps in that link.

In general, the network is configured such that such a particular QoS requirement is associated with a certain type of traffic or application, and this association (by way of a look-up table, for example) is made known to all nodes during configuration of the device. This configuration may be made by the user or, more generally, by the vendor of the device.

For example such a look-up table may provide priorities and QoS requirement values for latency that are associated with particular applications. By way of a specific example, for Voice over IP (VoIP) traffic, it is known that the latency must be less than 10ms while the throughput requirement is very small. Therefore, one power saving method for this type of application may be to switch on the communication node periodically more often than every 10ms, but only for a short period of time, as this is all that is required to send the small information packet (the voice data). This can be configured by default in the firmware of the modem, in which case no feedback from the receiver is required. Instead, the transmitter of the data detects that the type of data is VoIP and then acts according to how it is configured. As an alternative, an application could configure in real time the transmitter according to its own particular requirements.

Particularly important QoS requirements are latency (both one way latency -the maximum delay acceptable before arrival at destination and round way latency), jitter (the maximum variation in delay between several consecutives transmissions of the data) and throughput (or bandwidth) required (minimum speed that must be provided).

A specific way by which a network node apparatus 40 operates in a standby mode, with electrical power being periodically provided to the transceiver to provide for reception and transmission of data over the communications medium will now be described. Figure 3 provides a representation of when power is periodically provided to the transceiver. As can be seen from Figure 3 a timing cycle is defined by a series of nine time slots 78, with electrical power being provided to the transceiver of each network node apparatus in the network during at least the first time slot but during fewer than all of the time slots to thereby provide for a reduction in power consumption. The communications controller 12 transmits a synchronisation pulse 80 once every timing cycle during the first time slot 78 and the transmitted synchronisation pulse 80 is received by all the other network apparatus in the network 10. Transmission and reception of the synchronisation pulse 80 provides for time consistent cooperation between and amongst the network node apparatus in the network 10. Having all the network node apparatus capable of receiving data during at least one of the time slots when in the standby condition provides for, amongst other things, the transmission of management messages and the change of one or more network node apparatus in the network from the standby mode to the active mode without manual intervention.

As mentioned above, electrical power is provided to the transceiver of each network node apparatus in the network during at least the first time slot but during fewer than all of the time slots. Figures 4A to 4C show three different standby modes. The different standby modes provide for different levels of latency and bandwidth with different levels of reduced power consumption. According to Figure 4A electrical power is provided to the transceiver during the first time slot, when the synchronisation pulse 80 is transmitted, and during every even time slot 84. According to Figure 4B electrical power is provided to the transceiver during the first time slot, when the synchronisation pulse 80 is transmitted, and during the second and sixth time slots 86. According to Figure 4C electrical power is provided to the transceiver during the first time slot, when the synchronisation pulse 80 is transmitted, and during the second time slot only 88. Each network node apparatus 40 in the network 10 may be in a different standby mode. For example in the network configuration shown in Figure 1 the second node 14 may be operating in accordance with Figure 4A such that the second node 14 is capable of receiving network management messages at a frequent rate. Also, the third node 16 may be operating in accordance with Figure 4C such that the second node 14 is capable of receiving network management messages at a much reduced rate. Each network node apparatus 40 stores details of the active or standby configuration of the other network node apparatus in the network. Furthermore, each network node apparatus 40 may be changed amongst the standby modes shown in Figures 4A to 4C. As described above, the network node apparatus 40 is changed amongst the different standby modes either by manual operation or in response to receipt of a command from another network node apparatus.

By way of another example, the power saving apparatus may change the node apparatus amongst the normal mode, a first standby mode and a second standby mode with the first standby mode constituting an intermediate level of operation from which the network node apparatus is more readily changed to the normal mode than from the third operating condition. A more ready change of the network node apparatus to the normal mode may provide for improved quality of service, e.g. to return the network node apparatus to full operation within a limited period of time as might be required by the like of Voice over Internet (Vol) where latency is normally important. Furthermore having two or more operating conditions in which less power is provided to operative parts can provide for different levels of quality of service. For example, the normal mode may be appropriate for dealing with, e.g. transmitting or playing, a movie, the first standby mode may be appropriate for transmission of management commands and the second standby mode may be appropriate for monitoring for transmissions from another network node apparatus.

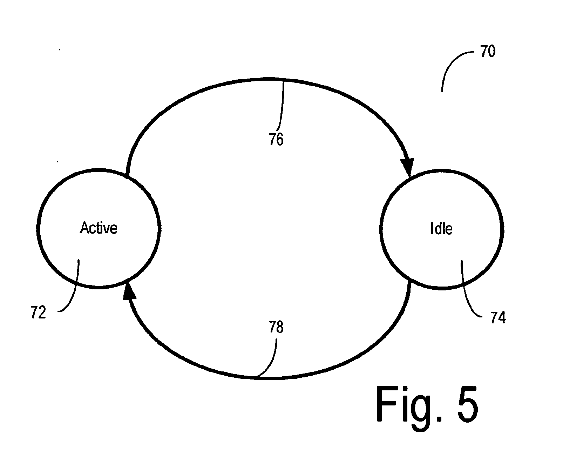

The finite state machine 70 of Figure 5 shows two possible operating conditions for a particular network node apparatus according to a further embodiment of the invention, namely the active mode 72 and the idle or standby mode 74. The network node apparatus changes from the active mode 72 to the idle mode 74 in dependence on a determination of a characteristic of the data received by the network node apparatus from the communications medium. More specifically, the processor of the network node apparatus compares an amount of data received by the network node apparatus during a period of time with a first predetermined level, e.g. a packet of data of 100 bytes. The first predetermined level is set by an operator of the network apparatus. If the amount of data received is above the first predetermined level the network node apparatus remains in the active mode 72. If the amount of data received is below the first predetermined level the network node apparatus changes 76 from the active mode 72 to the idle mode 74. The network node apparatus also changes from the active mode 72 to the idle mode 74 in response to receipt of certain commands from another network node apparatus in the network. More specifically, the processor determines the nature of a received command and the network node apparatus is operative to change mode in dependence on the determination. For example, if the received command is a network management message or an ARP then no change is effected. On the other hand, if the received command is an explicit power down command the network node apparatus changes mode. Discrimination between commands that require a change in mode and commands that will effect no change in mode are contained in a look up table along with their respective responses, be they change mode or ignore. The network node apparatus can also change from the active mode 72 to the idle mode 74 in response to an operator control, e.g. by actuation of an operator switch on the network node apparatus.

The network node apparatus also changes 78 from the idle mode 74 to the active mode 72 in dependence on a determination of a characteristic of the data received by the network node apparatus from the communications medium during the brief period when the transceiver is operative. More specifically, the processor of the network node apparatus compares an amount of data received by the network node apparatus during a period of time with a second predetermined level. The second predetermined level is set by an operator of the network apparatus and may be different to the first predetermined level. If the amount of data received is below the second predetermined level the network node apparatus remains in the idle mode 74. If the amount of data received is above the second predetermined level the network node apparatus changes 76 from the idle mode 74 to the active mode 72. The network node apparatus also changes from the idle mode 74 to the active mode 72 in response to receipt of certain commands from another network node apparatus in the network in the same fashion as for a change from the active to the idle mode as described above. The network node apparatus can also change from the idle mode 74 to the active mode 72 in response to an operator control.

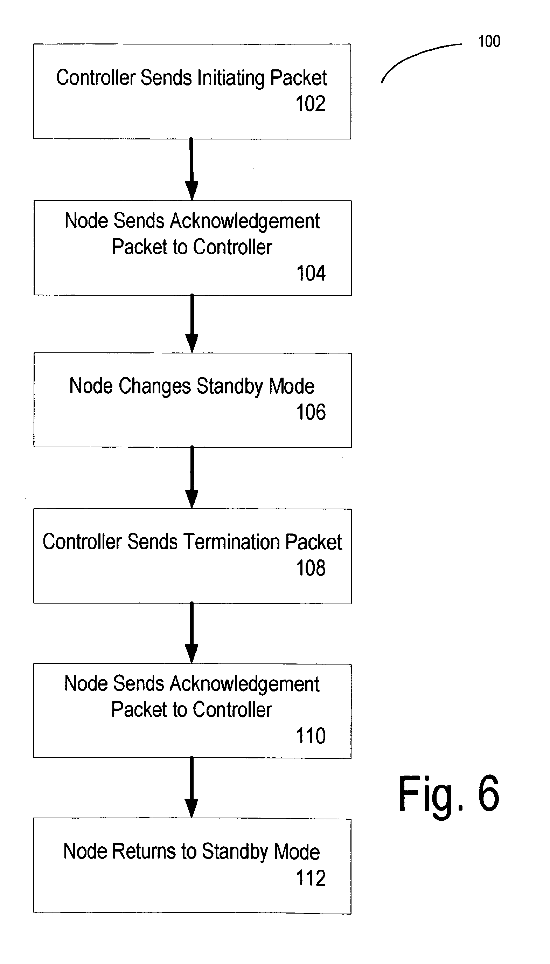

A further example means by which the network node apparatus 40 is changed amongst the different standby modes will now be described with reference to Figure 6. This is a flowchart 100 which represents an adaptive power management process. As a first step 102, the communications controller 12 transmits an initiating packet of data (which constitutes adaptive data) over the communications medium; the packet having the form of a MPDU (MAC Protocol Data Unit) comprising a preamble and a special frame control. Next the receiving node, e.g. the first node 12, transmits an acknowledgement packet (which constitutes acknowledgement data) 104 to the communications controller 12 in response to receipt of the initiating packet. On dependence of the contents of the packet, the receiving node changes from one standby mode to another, e.g. from the mode shown in Figure 4C to the mode shown in Figure 4A. Thus, the initiating packet is used to schedule in advance periods of time when data may be received by the receiving node. Data can then be transmitted to the receiving node in the scheduled time slots. When data transmission is complete the controller transmits a termination packet (which constitutes termination data) 108. Upon receipt of the termination packet the receiving node sends an acknowledgement packet to the communications controller 110 and the receiving node returns to its original standby mode, e.g. the mode shown in Figure 4C.

As a consequence of the methods described herein, it can be seen that a modem/node is able to configure its own power saving behaviour according to the throughput (or other QoS metric) required by the application. In a particular illustrative example, the node is initially configured such that it knows, or can detect the channel capacity, which may be 100 Mbps. It is also configured such that it knows, or can detect the throughput required for a particular application, for example 22 Mbps of throughput for streaming video. As a consequence, when streaming video, it may choose to connect to the channel only 22% of the time, so the rest of the time it remains "off". This could be achieved using the slot configuration of Figure 4B. As an alternative, it may configure itself to stay connected to the channel but to stream at only 22 Mbps. As mentioned previously, this may be achieved by reducing the clock frequency, so that the internal CPU will runs slower (but fast enough to achieve the required 22Mbps throughput), or by switching off parts of the hardware, where such parts are only required when a high speed is needed. In the latter case, while the required throughput is that required at the application level, it will be appreciated that it has an equivalent physical layer throughput.

The topology of the network 10 shown in Figure 1 can be changed, for example by the addition of a fifth (un-illustrated) node next to the third node 16. On being booted up the network node apparatus 40 of the fifth node is operative to listen for the synchronisation pulse 80. However, no synchronisation pulse 80 is received by the network node apparatus 40 of the fifth node because the network node apparatus 40 of the third node 16 is in a standby mode. As a result, the network node apparatus 40 of the fifth node transmits a WAKE packet (which constitutes wake data) with a period such that the time when the WAKE packet is transmitted is bound to overlap with a period when the other network node apparatus is operative to receive data during their standby modes. Upon reception of the WAKE packet, the other network node apparatus change from their standby modes to the active mode. Thereafter all the network node apparatus carry out a registration process whereby all the network node apparatus are aware of each other. This process reduces the likelihood of the fifth node becoming a second communications controller in the network 10.

## Claims

1. Network apparatus configured to form a network of operative devices in a building having an already installed communications medium, which, in use of the network apparatus, provides for communication of data between operative devices, the network apparatus comprising plural network node apparatus, each of the plural network node apparatus comprising:
at least one communications medium connector configured to, in use, connect with the installed communications medium; and
at least one operative device connection, which, in use, connects to an operative device,
at least a first of the plural network node apparatus further comprising:
a power saving apparatus that is operative to provide less power to operative parts of at least one of the network node apparatus itself and the operative device to which the network node apparatus is attached during a second operating condition than when in a first operating condition to thereby provide for reduced power consumption in the second operating condition;
the power saving apparatus operative to provide less power to the operative parts of at least one of the network node apparatus itself and the operative device to which the network node apparatus is attached during a third operating condition than when in the first operating condition, the third operating condition constituting an intermediate level of operation from which the network node apparatus is more readily changed to the first operating condition than from the second operating condition; and
a processor operative to determine at least one quality of service requirement and to change between the first, second and third conditions in dependence on the determination so as to enable routing of said data in accordance with said quality of service requirement, while minimising power consumption of said network apparatus.

2. Network apparatus as claimed in claim 1 wherein said processor is further operable to determine said routing of said data in accordance with said quality of service requirement, while minimising power consumption of said network apparatus.

3. Network apparatus according to claim 1 or 2, in which the processor is operative to further determine if an amount of data received by or transmitted from the network node apparatus is greater than a predetermined level, said predetermined level being greater than that indicating zero activity, and is operative to change between the first and the second operating conditions based on this further determination.

4. Network apparatus according to any preceding claim, in which the power saving apparatus is operative to provide less power to operative parts during the second operating condition by providing power to the operative parts for a predetermined period during the second operating condition, the predetermined period being shorter than the entire duration of the second operating condition.

5. Network apparatus according to any preceding claim wherein said network node apparatus remains operable to transmit and receive data when in said second operating condition, said data comprising network traffic other than system management messages operable to effect a change of operating condition.

6. Network apparatus according to any preceding claim in which said processor is operative to provide for at least one of transmission and reception over a period that is predetermined in relation to a periodic synchronisation signal, said period being subdivided into slots.

7. Network apparatus according to claim 6 wherein said network node apparatus is arranged to transmit data when in said second operating condition, by transmitting the data in only some of the slots each period, and powering down at least some of the network node apparatus circuitry during the other slots when no transmission is made, thereby reducing its average power consumption when in said second operating condition.

8. Network apparatus according to claim 6 or 7 wherein said network node apparatus is arranged to receive data when in said second operating condition, by first receiving a message indicating which slots are to be used for said transmission of data in each period, and powering down at least some of the network node apparatus circuitry during the other slots when no data is received, thereby reducing its average power consumption when in said second operating condition.

9. Network apparatus according to claim 6, 7 or 8 wherein there are provided further operating conditions having different slot usage configurations, each operating condition resulting in a different average power consumption of said network node apparatus.

10. Network apparatus according to any of claims 6 to 9 wherein said network node apparatus, when preparing to transmit data, is operable to determine the number of slots required for the transmission of said data, as part of said determination of said at least one quality of service requirement.

11. Network apparatus according to any of claims 6 to 10 wherein said network node apparatus, when preparing to transmit data, determines the frequency of slots required for the transmission of said data, as part of said determination of said at least one quality of service requirement.

12. Network apparatus according to claim 10 or 11 wherein said network node apparatus is operable to determine a routing strategy based upon the determined number and/or frequency of slots required, and said at least one quality of service requirement, and to transmit to one or more other network node apparatus a message indicating which operating condition it should be in and, if this is the second operating condition, which slots it can expect to receive data on, wherein at least some of the network node apparatus circuitry for each network node apparatus is arranged to be powered down during the slots when no data is either transmitted or received at that particular network node apparatus.

13. A network of operative devices in a building, the operative devices being connected to each other by means of the network apparatus according to any preceding claim and a communications medium already installed in the building.

14. A method of operating network apparatus that forms a network of operative devices in a building having an already installed communications medium, which provides for communication of data between operative devices, the method comprising for each of plural network node apparatus of the network apparatus:
connecting the network node apparatus to the installed communications medium with at least one communications medium connector; and
connecting the network node apparatus to an operative device with at least one operative device connection,
the method further comprising for at least a first of the plural network node apparatus:
operating a power saving apparatus to provide less power to operative parts of at least one of the network node apparatus itself and the operative device to which the network node apparatus is connected during a second operating condition than when in a first operating condition to thereby provide for reduced power consumption in the second operating condition,
operating the power saving apparatus to provide less power to the operative parts of at least one of the network node apparatus itself and the operative device to which the network node apparatus is attached during a third operating condition than when in the first operating condition, the third operating condition constituting an intermediate level of operation from which the network node apparatus is more readily changed to the first operating condition than from the second operating condition; and
operating a processor to determine at least one quality of service requirement and to change between the first, second and third conditions in dependence on the determination so as to enable routing of said data in accordance with said quality of service requirement, while minimising power consumption of said network apparatus.

15. A method as claimed in claim 14 wherein there are provided at least one further operating condition, in addition to said first operation condition, said second and further operation condition(s) providing different levels of power saving.

## Patentansprüche

1. Netzwerkvorrichtung, die dazu konfiguriert ist, ein Netzwerk von Betriebsgeräten in einem Gebäude mit einem bereits installierten Kommunikationsmedium zu bilden, welches im Gebrauch der Netzwerkvorrichtung Datenkommunikation zwischen Betriebsgeräten bereitstellt, wobei die Netzwerkvorrichtung mehrere Netzwerkknotengeräte aufweist, wobei jedes der mehreren Netzwerkknotengeräte aufweist:
wenigstens eine Kommunikationsmedium-Verbindungseinrichtung, die dazu konfiguriert ist, sich im Gebrauch mit dem installierten Kommunikationsmedium zu verbinden; und
wenigstens eine Betriebsgerät-Verbindungseinrichtung, die sich im Gebrauch mit einem Betriebsgerät verbindet,
wobei wenigstens ein erstes der mehreren Netzwerkknotengeräte des Weiteren aufweist:
ein Stromspargerät, das dazu betreibbar ist, an Betriebsteile von wenigstens einem des Netzwerkknotengeräts selbst und des Betriebsgeräts, mit dem das Netzwerkknotengerät während eines zweiten Betriebszustands verbunden ist, weniger Strom zu liefern, als in einem ersten Betriebszustand, wodurch für reduzierten Stromverbrauch im zweiten Betriebszustand gesorgt wird;
wobei das Stromspargerät dazu betreibbar ist, an die Betriebsteile von wenigstens einem des Netzwerkknotengeräts selbst und des Betriebsgeräts, mit dem das Netzwerkknotengerät während eines dritten Betriebszustands verbunden ist, weniger Strom zu liefern, als in dem ersten Betriebszustand, wobei der dritte Betriebszustand eine Betriebszwischenstufe darstellt, aus welcher das Netzwerkknotengerät leichter in den ersten Betriebszustand wechseln kann, als aus dem zweiten Betriebszustand; und
einen Prozessor, der dazu betreibbar ist, wenigstens ein Dienstgüteerfordernis zu bestimmen und zwischen dem ersten, zweiten und dritten Zustand in Abhängigkeit von der Bestimmung zu wechseln, um das Routen der Daten gemäß dem Dienstgüteerfordernis zu ermöglichen, während der Stromverbrauch der Netzwerkvorrichtung minimiert wird.

2. Netzwerkvorrichtung nach Anspruch 1, wobei der Prozessor des Weiteren dazu betreibbar ist, das Routen der Daten gemäß dem Dienstgüteerfordernis zu bestimmen, während der Stromverbrauch der Netzwerkvorrichtung minimiert wird.

3. Netzwerkvorrichtung nach Anspruch 1 oder 2, wobei der Prozessor dazu betreibbar ist, des Weiteren zu bestimmen, ob eine von dem Netzwerkknotengerät empfangene oder gesendete Datenmenge größer als eine vorgegebene Stufe ist, wobei die vorgegebene Stufe größer als diejenige ist, die eine Nullaktivität angibt, und dazu betreibbar ist, zwischen dem ersten und dem zweiten Betriebszustand basierend auf dieser weiteren Bestimmung zu wechseln.

4. Netzwerkvorrichtung nach einem der vorhergehenden Ansprüche, wobei das Stromspargerät dazu betreibbar ist, weniger Strom an Betriebsteile während des zweiten Betriebszustands zu liefern durch Liefern von Strom an die Betriebsteile für einen vorgegebenen Zeitraum während des zweiten Betriebszustands, wobei der vorgegebene Zeitraum kürzer ist, als die Gesamtdauer des zweiten Betriebszustands.

5. Netzwerkvorrichtung nach einem der vorhergehenden Ansprüche, wobei das Netzwerkknotengerät betreibbar bleibt, um Daten zu senden und zu empfangen, wenn es in dem zweiten Betriebszustand ist, wobei die Daten Netzwerkverkehr mit Ausnahme von Systemverwaltungsnachrichten aufweisen, betreibbar um eine Änderung des Betriebszustands zu bewirken.

6. Netzwerkvorrichtung nach einem der vorhergehenden Ansprüche, wobei der Prozessor dazu betreibbar ist, während eines Zeitraums, der in Bezug auf ein periodisches Synchronisierungssignal vorgegeben ist, wenigstens eines von Senden und Empfangen bereitzustellen, wobei der Zeitraum in Schlitze aufgeteilt ist.

7. Netzwerkvorrichtung nach Anspruch 6, wobei das Netzwerkknotengerät dazu ausgelegt ist, Daten zu senden, wenn es sich in dem zweiten Betriebszustand befindet, indem die Daten pro Zeitraum nur in einigen der Schlitze gesendet werden, und indem wenigstens ein Teil der Netzwerkknotengerät-Schaltung während der anderen Schlitze abgeschaltet wird, wenn nicht gesendet wird, wodurch sein durchschnittlicher Stromverbrauch reduziert wird, wenn es sich in dem zweiten Betriebszustand befindet.

8. Netzwerkvorrichtung nach Anspruch 6 oder 7, wobei das Netzwerkknotengerät dazu ausgelegt ist, Daten zu empfangen, wenn es ich in dem zweiten Betriebszustand befindet, indem es zunächst eine Nachricht empfängt, die angibt, welche Schlitze für die Übertragung von Daten in jedem Zeitraum zu verwenden sind, und indem es wenigstens einen Teil der Netzwerkknotengerät-Schaltung während der anderen Schlitze abschaltet, wenn keine Daten empfangen werden, wodurch sein durchschnittlicher Stromverbrauch reduziert wird, wenn es sich in dem zweiten Betriebszustand befindet.

9. Netzwerkvorrichtung nach Anspruch 6, 7 oder 8, wobei weitere Betriebszustände mit unterschiedlichen Schlitzbenutzungskonfigurationen bereitgestellt werden, wobei jeder Betriebszustand zu einem anderen durchschnittlichen Stromverbrauch des Netzwerkknotengeräts führt.

10. Netzwerkvorrichtung nach einem der Ansprüche 6 bis 9, wobei das Netzwerkknotengerät, wenn es sich zum Datensenden vorbereitet, dazu betreibbar ist, die Anzahl der für die Übertragung der Daten erforderlichen Schlitze zu bestimmen, als Teil der Bestimmung des wenigstens einen Dienstgüteerfordernisses.

11. Netzwerkvorrichtung nach einem der Ansprüche 6 bis 10, wobei das Netzwerkknotengerät, wenn es sich zum Datensenden vorbereitet, die Frequenz der für die Übertragung der Daten benötigten Schlitze bestimmt, als Teil der Bestimmung des wenigstens einen Dienstgüteerfordernisses.

12. Netzwerkvorrichtung nach Anspruch 10 oder 11, wobei das Netzwerkknotengerät dazu betreibbar ist, eine Routingstrategie basierend auf der bestimmten Anzahl und/oder Frequenz benötigter Schlitze und dem wenigstens einen Dienstgüteerfordernis zu bestimmen, und an ein oder mehrere andere Netzwerkknotengeräte eine Nachricht zu senden, die angibt, in welchem Betriebszustand es sein sollte und, wenn dies der zweite Betriebszustand ist, auf welchen Schlitzen es den Empfang von Daten erwarten kann, wobei wenigstens ein Teil der Netzwerkknotengerät-Schaltung für jedes Netzwerkknotengerät dazu ausgelegt ist, während der Schlitze, wenn an diesem bestimmten Netzwerkknotengerät weder Daten gesendet noch empfangen werden, abgeschaltet zu werden.

13. Netzwerk von Betriebsgeräten in einem Gebäude, wobei die Betriebsgeräte mittels der Netzwerkvorrichtung gemäß einem der vorhergehenden Ansprüche und einem in dem Gebäude bereits installierten Kommunikationsmedium miteinander verbunden sind.

14. Verfahren zum Betreiben einer Netzwerkvorrichtung, die ein Netzwerk von Betriebsgeräten in einem Gebäude mit einem bereits installierten Kommunikationsmedium bildet, welches Datenkommunikation zwischen Betriebsgeräten bereitstellt, wobei das Verfahren für jedes von mehreren Netzwerkknotengeräten der Netzwerkvorrichtung umfasst:
Verbinden des Netzwerkknotengeräts mit dem installierten Kommunikationsmedium mit wenigstens einer Kommunikationsmedium-Verbindungseinrichtung;
Verbinden des Netzwerkknotengeräts mit einem Betriebsgerät mit wenigstens einer Betriebsgerät-Verbindungseinrichtung,
wobei das Verfahren für wenigstens ein erstes der mehreren Netzwerkknotengeräte des Weiteren umfasst:
Betreiben eines Stromspargeräts, um an Betriebsteile von wenigstens einem des Netzwerkknotengeräts selbst und des Betriebsgeräts, mit dem das Netzwerkknotengerät während eines zweiten Betriebszustands verbunden ist, weniger Strom zu liefern, als in einem ersten Betriebszustand, um dadurch für reduzierten Stromverbrauch im zweiten Betriebszustand zu sorgen;
Betreiben des Stromspargeräts, um an die Betriebsteile von wenigstens einem des Netzwerkknotengeräts selbst und des Betriebsgeräts, mit dem das Netzwerkknotengerät während eines dritten Betriebszustands verbunden ist, weniger Strom zu liefern, als in dem ersten Betriebszustand, wobei der dritte Betriebszustand eine Betriebszwischenstufe darstellt, aus welcher das Netzwerkknotengerät leichter in den ersten Betriebszustand wechseln kann, als aus dem zweiten Betriebszustand; und
Betreiben eines Prozessors, um wenigstens ein Dienstgüteerfordernis zu bestimmen und zwischen dem ersten, zweiten und dritten Zustand in Abhängigkeit von der Bestimmung zu wechseln, um das Routen der Daten gemäß dem Dienstgüteerfordernis zu ermöglichen, während der Stromverbrauch der Netzwerkvorrichtung minimiert wird.

15. Verfahren nach Anspruch 14, wobei zusätzlich zu dem ersten Betriebszustand wenigstens ein weiterer Betriebszustand bereitgestellt wird, wobei der zweite und die weiteren Betriebszustände verschiedene Stromsparstufen bereitstellen.

## Revendications

1. Appareil de réseau configuré pour former un réseau de dispositifs opérationnels dans un immeuble ayant un support de communications déjà installé, qui, lors de l'utilisation de l'appareil de réseau, prévoit une communication de données entre dispositifs opérationnels, l'appareil de réseau comprenant des appareils multiples de noeud de réseau, chacun des appareils multiples de noeud de réseau comprenant :
au moins un connecteur de support de communications configuré pour, à l'utilisation, se connecter avec le support de communications installé ; et
au moins une connexion de dispositif opérationnel qui, à l'utilisation, se connecte à un dispositif opérationnel,
au moins un premier parmi les appareils multiples de noeud de réseau comprenant en outre :
un appareil d'économie d'énergie qui est utilisable pour délivrer moins d'énergie à des parties opérationnelles d'au moins un parmi l'appareil de noeud de réseau lui-même et le dispositif opérationnel auquel l'appareil de noeud de réseau est relié dans un deuxième état de fonctionnement que lorsqu'il est dans un premier état de fonctionnement pour ainsi offrir une consommation d'énergie réduite dans le deuxième état de fonctionnement ;
l'appareil d'économie d'énergie utilisable pour délivrer moins d'énergie aux parties opérationnelles d'au moins un parmi l'appareil de noeud de réseau lui-même et le dispositif opérationnel auquel l'appareil de noeud de réseau est relié dans un troisième état de fonctionnement que lorsqu'il est dans le premier état de fonctionnement, le troisième état de fonctionnement constituant un niveau intermédiaire de fonctionnement duquel l'appareil de noeud de réseau est passé au premier état de fonctionnement plus facilement que du deuxième état de fonctionnement ; et
un processeur utilisable pour déterminer au moins une exigence de qualité de service et pour commuter entre les premier, deuxième et troisième états en fonction de la détermination de façon à permettre un acheminement desdites données conformément à ladite exigence de qualité de service, tout en minimisant une consommation d'énergie dudit appareil de réseau.

2. Appareil de réseau selon la revendication 1, dans lequel ledit processeur est en outre utilisable pour déterminer ledit acheminement desdites données conformément à ladite exigence de qualité de service, tout en minimisant une consommation d'énergie dudit appareil de réseau.

3. Appareil de réseau selon la revendication 1 ou 2, dans lequel le processeur est utilisable pour déterminer en outre si une quantité de données reçues ou transmises par l'appareil de noeud de réseau est supérieure à un niveau prédéterminé, ledit niveau prédéterminé étant supérieur à celui indiquant une activité zéro, et est utilisable pour commuter entre les premier et deuxième états de fonctionnement sur la base de cette autre détermination.

4. Appareil de réseau selon une quelconque revendication précédente, dans lequel l'appareil d'économie d'énergie est utilisable pour délivrer moins d'énergie à des parties opérationnelles dans le deuxième état de fonctionnement en délivrant une énergie aux parties opérationnelles sur une période prédéterminée dans le deuxième état de fonctionnement, la période prédéterminée étant plus courte que la durée entière du deuxième état de fonctionnement.

5. Appareil de réseau selon une quelconque revendication précédente, dans lequel ledit appareil de noeud de réseau reste opérationnel pour transmettre et recevoir des données lorsqu'il est dans ledit deuxième état de fonctionnement, lesdites données comprenant un trafic réseau autre que des messages de gestion système utilisables pour effectuer un changement d'état de fonctionnement.

6. Appareil de réseau selon une quelconque revendication précédente, dans lequel ledit processeur est utilisable pour prévoir au moins une parmi une transmission et une réception sur une période qui est prédéterminée par rapport à un signal de synchronisation périodique, ladite période étant subdivisée en intervalles.

7. Appareil de réseau selon la revendication 6, dans lequel ledit appareil de noeud de réseau est agencé de façon à transmettre des données lorsqu'il est dans ledit deuxième état de fonctionnement, en ne transmettant les données que dans certains des intervalles à chaque période, et en mettant hors tension au moins certains des circuits d'appareil de noeud de réseau pendant les autres intervalles lorsqu'aucune transmission n'est effectuée, réduisant ainsi sa consommation moyenne d'énergie lorsqu'il est dans ledit deuxième état de fonctionnement.

8. Appareil de réseau selon la revendication 6 ou 7, dans lequel ledit appareil de noeud de réseau est agencé de façon à recevoir des données lorsqu'il est dans ledit deuxième état de fonctionnement, en recevant d'abord un message indiquant quels intervalles doivent être utilisés pour ladite transmission de données dans chaque période, et en mettant hors tension au moins certains des circuits d'appareil de noeud de réseau pendant les autres intervalles lorsqu'aucune donnée n'est reçue, réduisant ainsi sa consommation moyenne d'énergie lorsqu'il est dans ledit deuxième état de fonctionnement.

9. Appareil de réseau selon la revendication 6, 7 ou 8, dans lequel il est prévu d'autres états de fonctionnement ayant différentes configurations d'utilisation d'intervalles, chaque état de fonctionnement résultant en une consommation moyenne d'énergie différente dudit appareil de noeud de réseau.

10. Appareil de réseau selon l'une quelconque des revendications 6 à 9, dans lequel ledit appareil de noeud de réseau, lorsqu'il se prépare à transmettre des données, est utilisable pour déterminer le nombre d'intervalles requis pour la transmission desdites données, comme une partie de la détermination de ladite au moins une exigence de qualité de service.

11. Appareil de réseau selon l'une quelconque des revendications 6 à 10, dans lequel ledit appareil de noeud de réseau, lorsqu'il se prépare à transmettre des données, détermine la fréquence d'intervalles requis pour la transmission desdites données, comme une partie de la détermination de ladite au moins une exigence de qualité de service.

12. Appareil de réseau selon la revendication 10 ou 11, dans lequel ledit appareil de noeud de réseau est utilisable pour déterminer une stratégie d'acheminement sur la base du nombre et/ou de la fréquence déterminés d'intervalles requis, et de ladite au moins une exigence de qualité de service, et pour transmettre à un ou plusieurs autres appareils de noeud de réseau un message indiquant dans quel état de fonctionnement il devrait être et, si celui-ci est le deuxième état de fonctionnement, sur quels intervalles il peut s'attendre à recevoir des données, dans lequel au moins certains des circuits d'appareil de noeud de réseau pour chaque appareil de noeud de réseau sont agencés pour être mis hors tension pendant les intervalles pendant lesquels aucune donnée n'est transmise ou reçue dans cet appareil de noeud de réseau particulier.

13. Réseau de dispositifs opérationnels dans un immeuble, les dispositifs opérationnels étant connectés les uns aux autres au moyen de l'appareil de réseau selon une quelconque revendication précédente et d'un support de communications déjà installé dans l'immeuble.

14. Procédé d'utilisation d'un appareil de réseau qui forme un réseau de dispositifs opérationnels dans un immeuble ayant un support de communications déjà installé, qui permet une communication de données entre dispositifs opérationnels, le procédé comprenant pour chacun parmi des appareils multiples de noeud de réseau de l'appareil de réseau :
la connexion de l'appareil de noeud de réseau au support de communications installé avec au moins un connecteur de support de communications ; et
la connexion de l'appareil de noeud de réseau à un dispositif opérationnel avec au moins une connexion de dispositif opérationnel,
le procédé comprenant en outre pour au moins un premier des appareils multiples de noeud de réseau :
l'utilisation d'un appareil d'économie d'énergie pour délivrer moins d'énergie à des parties opérationnelles d'au moins un parmi l'appareil de noeud de réseau lui-même et le dispositif opérationnel auquel l'appareil de noeud de réseau est relié dans un deuxième état de fonctionnement que lorsqu'il est dans un premier état de fonctionnement pour ainsi offrir une consommation d'énergie réduite dans le deuxième état de fonctionnement,
l'utilisation de l'appareil d'économie d'énergie pour délivrer moins d'énergie aux parties opérationnelles d'au moins un parmi l'appareil de noeud de réseau lui-même et le dispositif opérationnel auquel l'appareil de noeud de réseau est relié dans un troisième état de fonctionnement que lorsqu'il est dans le premier état de fonctionnement, le troisième état de fonctionnement constituant un niveau intermédiaire de fonctionnement duquel l'appareil de noeud de réseau est passé au premier état de fonctionnement plus facilement que du deuxième état de fonctionnement ; et
l'utilisation d'un processeur pour déterminer au moins une exigence de qualité de service et pour commuter entre les premier, deuxième et troisième états en fonction de la détermination de façon à permettre un acheminement desdites données conformément à ladite exigence de qualité de service, tout en minimisant une consommation d'énergie dudit appareil de réseau.

15. Procédé selon la revendication 14, dans lequel il est prévu au moins un autre état de fonctionnement, en plus dudit premier état de fonctionnement, lesdits deuxième et autre états de fonctionnement permettant différents niveaux d'économie d'énergie.
